# EUROPEAN PATENT APPLICATION

(11) **EP 4 826 167 A1**
(43) Date of publication of application: **21.10.2026**
(21) Application number: 23961603.0
(22) Date of filing: 14.12.2023
(51) Int. Cl.: E02F 3/43, E02F 9/26, E02F 9/20, E02F 9/24

(54) **METHOD AND SYSTEM FOR CONTROLLING EXCAVATOR**

(71) Applicant: Volvo Construction Equipment AB, 631 85 Eskilstuna (SE)
(72) Inventor: KIM, Jiyun, Changwon-si, Gyeongsangnam-do 51710 (KR)
(74) Representative: Kransell & Wennborg KB
(86) International application number: PCT/KR2023/020612
(87) International publication number: WO 2025/127202

(57) **Abstract**

One aspect of the present disclosure provides a method for controlling an excavator in order to cause a bucket containing an object to automatically reach a loading position from a digging position, the method comprising steps in which: an automatic loading-position reaching function is activated as an automatic loading-position reaching mode is selected through a display controller; information that is needed to perform the automatic loading-position reaching function is obtained by a reception unit; the position coordinates (Xr, Yr, Zr) of a destination point that is the loading position which a bucket is to reach are determined by a control unit on the basis of the obtained information; and the automatic loading-position reaching function is performed by the control unit such that the bucket reaches the destination point on the basis of the determined position coordinates (Xr, Yr, Zr) of the destination point.

## Description

### TECHNICAL FIELD

The present disclosure generally relates to a method and a system for controlling an excavator. In a particular aspect, the present disclosure relates to a method and a system for controlling the movement of a bucket, an arm, a boom, and an upper swing structure such that the bucket containing an excavation object efficiently reaches a loading position. The present disclosure may be applied to large vehicles, such as trucks, buses, and construction equipment, among various vehicle types. Although the present disclosure may be described with respect to specific vehicles, the present disclosure is not limited to any particular type of vehicle.

### BACKGROUND ART

An excavator is a type of construction machinery that performs various operations at construction sites, including excavation work for digging earth, loading work for transporting excavated soil and loading the same onto a load receiver, trenching work for foundation construction, crushing work for building demolition, leveling work for ground preparation, and grading work for surface smoothing.

The excavator may generally include a lower traveling structure that serves to move equipment, an upper swing structure that is swingably mounted on the lower traveling structure, and a working device (a boom, an arm, a bucket, etc.) that is mounted in front of the upper swing structure.

In such an excavator, excavation work, loading work, and the like are generally controlled by manual operation of an operator, and there is a problem in that the operation is complex and the operating skills of individual operators vary, so that excavation and loading results are achieved differently depending on the operator.

Accordingly, there is an increasing demand for an autonomous excavation and loading technology capable of solving the above-described problems and accurately determining excavation and loading trajectories.

### SUMMARY OF THE INVENTION

### TECHNICAL PROBLEM

An object of the present disclosure is to provide a method and a system for controlling the movement of a bucket, an arm, a boom, and an upper swing structure such that the bucket containing an excavation object efficiently reaches a loading position.

### TECHNICAL SOLUTION

A first aspect of the present disclosure provides a method for controlling an excavator in order to cause a bucket containing an object to automatically reach a loading position from a digging position, the method comprising the steps of: activating an automatic loading-position reaching function as an automatic loading-position reaching mode is selected through a display controller; obtaining, by a reception unit, information that is needed to perform the automatic loading-position reaching function; determining, by a control unit, position coordinates (Xr, Yr, Zr) of a destination point as the loading position to be reached by the bucket, on the basis of the obtained information; and performing, by the control unit, the automatic loading-position reaching function such that the bucket reaches the destination point on the basis of the determined position coordinates (Xr, Yr, Zr) of the destination point.

In some examples, optionally including at least one preferred example, the step of performing the automatic loading-position reaching function may include the steps of: calculating a target swing angle of an upper swing structure and target rotational angles of one or more of a boom, an arm, and the bucket that allow the bucket to reach the position coordinates (Xr, Yr, Zr) of the destination point, on the basis of the determined position coordinates (Xr, Yr, Zr) of the destination point; moving the boom until the bucket reaches the Z-coordinate (Zr); swinging the upper swing structure on the basis of the target swing angle; and moving one or more of the boom, the arm, and the bucket until the bucket reaches the X-coordinate (Xr), the Y-coordinate (Yr), and the Z-coordinate (Zr) while maintaining a bucket angle during or after the swing operation of the upper swing structure.

In some examples, optionally including at least one preferred example, the position of the bucket may be based on a position of the center of a rotational axis of the bucket.

In some examples, optionally including at least one preferred example, in the step of determining the position coordinates (Xr, Yr, Zr) of the destination point, the Z-coordinate (Zr) of the destination point may be determined by summing the width of the bucket, a first height which is a distance between the ground and an uppermost position of the load receiver, and a preset margin.

In some examples, optionally including at least one preferred example, in the step of moving the boom, the swing operation of the upper swing structure may be prohibited while the movement of the boom is not completed.

In some examples, optionally including at least one preferred example, the step of moving the boom may further include the step of determining, while the movement of the boom is completed, whether the bucket is in an overload state based on whether an amount of the object contained in the bucket exceeds a preset criterion.

In some examples, optionally including at least one preferred example, in the step of swinging the upper swing structure, when the bucket is determined to be in the overload state, a swing speed of the upper swing structure may be limited to a certain ratio of a preset swing speed in order to prevent the object contained in the bucket from spilling out of the bucket during the swing.

In some examples, optionally including at least one preferred example, in the step of swinging the upper swing structure, when the bucket is determined not to be in the overload state, the upper swing structure may be swung at a preset swing speed.

In some examples, optionally including at least one preferred example, in the step of swinging the upper swing structure, a swing speed of the upper swing structure may be reduced when the bucket enters a swing braking section during the swing operation of the upper swing structure.

In some examples, optionally including at least one preferred example, the method may further comprise the step of determining, by the control unit, whether the bucket has reached the destination point.

In some examples, optionally including at least one preferred example, in the step of determining whether the bucket has reached the destination point, when the bucket is determined to have reached the destination point within a preset time, completion of the automatic loading-position reaching function may be displayed on the display controller, and when the bucket is determined not to have reached the destination point within the preset time, the determination may be regarded as an error, the error may be displayed on the display controller, and the automatic loading-position reaching function may continue to be performed until the bucket reaches the destination point.

A second aspect of the present disclosure provides a system for controlling an excavator in order to cause a bucket containing an object to automatically reach a loading position from a digging position, the system comprising: a drive unit including a boom, an arm, the bucket, and an upper swing structure; a reception unit that obtains information that is needed to perform an automatic loading-position reaching function; a display controller serving as an input/output interface for receiving a user input or outputting information, wherein the display controller activates the automatic loading-position reaching function and displays the information obtained by the reception unit; and a control unit that determines position coordinates (Xr, Yr, Zr) of a destination point as the loading position to be reached by the bucket, on the basis of the information obtained by the reception unit, and controls the drive unit to perform the automatic loading-position reaching function such that the bucket reaches the destination point on the basis of the determined position coordinates (Xr, Yr, Zr) of the destination point.

In some examples, optionally including at least one preferred example, the control unit may calculate a target swing angle of an upper swing structure and target rotational angles of one or more of the boom, the arm, and the bucket that allow the bucket to reach the position coordinates (Xr, Yr, Zr) of the destination point, on the basis of the determined position coordinates (Xr, Yr, Zr) of the destination point, move the boom until the bucket reaches the Z-coordinate (Zr), swing the upper swing structure on the basis of the target swing angle, and move one or more of the boom, the arm, and the bucket until the bucket reaches the X-coordinate (Xr), the Y-coordinate (Yr), and the Z-coordinate (Zr) while maintaining a bucket angle during or after the swing operation of the upper swing structure.

In some examples, optionally including at least one preferred example, the position of the bucket may be based on a position of the center of the rotational axis of the bucket.

In some examples, optionally including at least one preferred example, the control unit may determine the Z-coordinate (Zr) of the destination point by summing the width of the bucket, a first height which is a distance between the ground and an uppermost position of the load receiver, and a preset margin.

In some examples, optionally including at least one preferred example, the control unit may prohibit the swing operation of the upper swing structure while the movement of the boom is not completed.

In some examples, optionally including at least one preferred example, the control unit may determine, while the movement of the boom is completed, whether the bucket is in an overload state based on whether an amount of the object contained in the bucket exceeds a preset criterion.

In some examples, optionally including at least one preferred example, the control unit, when the bucket is determined to be in the overload state, may limit a swing speed of the upper swing structure to a certain ratio of a preset swing speed in order to prevent the object contained in the bucket from spilling out of the bucket during the swing.

In some examples, optionally including at least one preferred example, the control unit, when the bucket is determined not to be in the overload state, may swing the upper swing structure at a preset swing speed.

In some examples, optionally including at least one preferred example, the control unit may reduce the swing speed when the bucket enters a swing braking section during the swing operation of the upper swing structure.

In some examples, optionally including at least one preferred example, the control unit may determine whether the bucket has reached the destination point, wherein when the bucket is determined to have reached the destination point within a preset time, the control unit may display completion of the automatic loading-position reaching function on the display controller, and when the bucket is determined not to have reached the destination point within the preset time, the control unit may regard the determination as an error, display the error on the display controller, and continue to perform the automatic loading-position reaching function until the bucket reaches the destination point.

### ADVANTAGEOUS EFFECTS

The method and system for controlling an excavator according to the present disclosure may improve work efficiency and operator convenience by performing the automatic loading-position reaching function to cause the bucket containing the excavation object to automatically reach the loading position.

The effects of the present disclosure are not limited to those described above, and should be understood to include all effects that may be inferred from the detailed description of the present disclosure or the configuration of the disclosure described in the claims.

The disclosed aspects, embodiments (including any preferred embodiments), and/or accompanying claims may be appropriately combined as will be apparent to those skilled in the art.

Additional features and advantages are set forth in the following description, claims, and drawings, and in part will be readily apparent to those skilled in the art or may be appreciated by practicing the disclosure as described herein.

### BRIEF DESCRIPTION OF THE DRAWINGS

Hereinafter, examples will be described in more detail with reference to the accompanying drawings.
FIG. 1 is a diagram illustrating a drive unit of an excavator according to one aspect of the present disclosure.
FIG. 2 is a block diagram schematically illustrating a configuration of a system for controlling an excavator according to one aspect of the present disclosure.
FIGS. 3 and 4 are flowcharts illustrating a method for controlling an excavator according to one embodiment.
FIG. 5 is a conceptual diagram illustrating a movement trajectory of an excavator performing an automatic loading-position reaching function according to one embodiment.
FIGS. 6 to 8 are diagrams illustrating a step of determining position coordinates of a destination point according to one embodiment.
FIGS. 9 and 10 are diagrams illustrating a step of moving a boom according to one embodiment.

### DETAILED DESCRIPTION OF THE INVENTION

The detailed description set forth below provides information and examples of the disclosed technology along with sufficient detail to enable those skilled in the art to practice the present disclosure. However, the present disclosure may be implemented in various different forms and is therefore not limited to the aspects described herein. In addition, in order to clearly describe the present disclosure in the drawings, parts irrelevant to the description are omitted, and similar reference numerals are assigned to similar parts throughout the specification.

The terms used herein are merely for describing particular aspects and are not intended to limit the present disclosure. As used herein, the singular forms "a", "an", and "the" are intended to include the plural forms as well, unless the context clearly indicates otherwise. As used herein, the term "and/or" includes all combinations of one or more of the related listed items. As used herein, the terms "comprises", "includes'", including", and "comprising" specify the presence of stated features, integers, steps, operations, elements, and/or components, but do not preclude the presence or addition of one or more other functions, integers, steps, operations, elements, components, and/or groups thereof.

Although the terms first, second, etc. may be used herein to describe various elements, it will be understood that these elements should not be limited by these terms. These terms are used solely to distinguish one element from another. For example, without departing from the scope of the present disclosure, a first component may be referred to as a second component, and similarly, the second component may also be referred to as the first component.

Relative terms such as "below," "above," "upper side," "lower side," "horizontal," and "vertical" may be used herein to describe the relationship between one element and another as illustrated in the drawings. It should be understood that these terms, along with the terms discussed above, are intended to include different orientations of the apparatus in addition to the orientations illustrated in the drawings. When a component is described as being "connected" or "coupled" to another component, it will be understood that the component may be directly connected or coupled to the other component, or may be connected or coupled via one or more intervening components. In contrast, when an element is described as "directly connected" or "directly coupled" to another element, no intervening element exists therebetween.

Unless otherwise defined, all terms used herein (including technical and scientific terms) have the same meaning as commonly understood by those skilled in the art to which the present disclosure pertains. The terms used herein are to be interpreted as having a meaning consistent with their meaning in the context of the specification and related art, and it is to be further understood that the terms will not be interpreted in an idealized or overly formal sense unless explicitly defined herein.

Hereinafter, one aspect of the present disclosure will be described in detail with reference to the accompanying drawings.

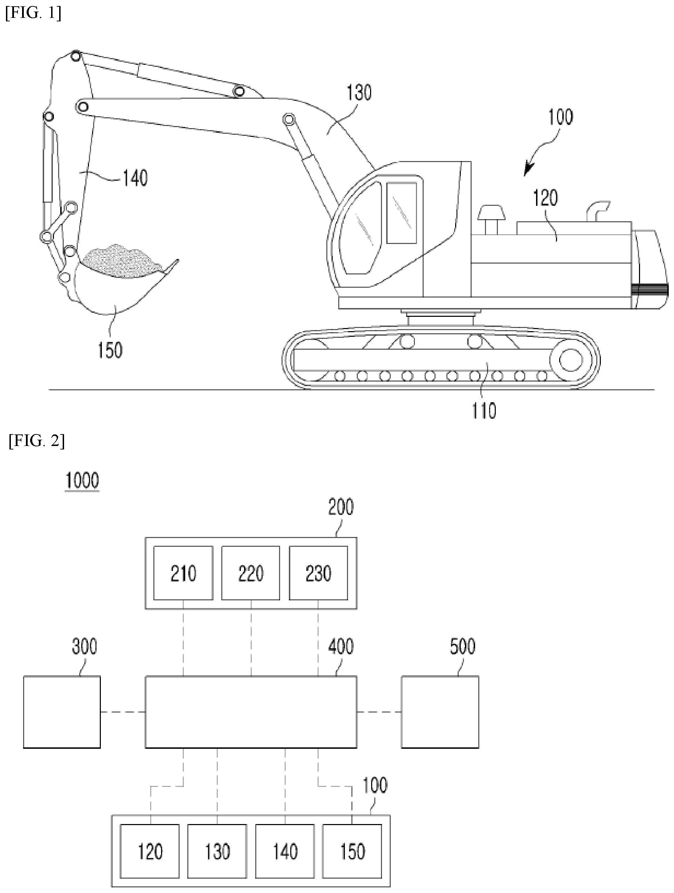

FIG. 1 is a diagram illustrating a drive unit of an excavator according to one aspect of the present disclosure, and FIG. 2 is a block diagram schematically illustrating a configuration of a system for controlling an excavator according to one aspect of the present disclosure.

Referring to FIGS. 1 and 2, the excavator is a device capable of excavating objects, and may include various types of excavators capable of performing excavation work in various ways, such as soil transport work, building demolition work, and ground leveling work.

In one embodiment, the excavator may be implemented by including a computing device that operates through a computer program to realize the functions described herein, and in another embodiment, the excavator may be controlled according to a control signal of a control unit.

According to one aspect of the present disclosure, a system 1000 for controlling an excavator in order to cause a bucket containing an object to automatically reach a loading position from a digging position includes a drive unit 100, a reception unit 200, a display controller 300, a control unit 400, and an operation unit 500.

The drive unit 100 is configured to include an upper swing structure 120 that is supported to be swingable on a lower traveling structure 110, and a working device connected to the upper swing structure 120. The working device may include, for example, a boom 130, an arm 140, and a bucket 150.

The lower traveling structure 110 is configured to support the load of the upper swing structure 120, the boom 130, the arm 140, and the bucket 150, and move the excavator in the front-back direction or left-right direction for work purposes.

The upper swing structure 120 is configured to be supported on the lower traveling structure 110 and is designed to swing on the lower traveling structure 110 by a swing device including a swing motor, a swing reduction gear, and the like.

The arm 140 is connected to the bucket 150 and the boom 130, respectively, and according to one embodiment, the boom 130, the arm 140, and the bucket 150 are connected in this order from the upper swing structure 120 through joints, and each joint may be actuated by a hydraulic cylinder.

For example, the arm 140 is connected, at one end thereof, to the boom 130 that is connected to the upper swing structure 120 of the excavator, and, at the other end thereof, is connected to the bucket 150, and the boom 130, the arm 140, and the bucket 150 may rotate about one or more axes by means of a boom cylinder, an arm cylinder, and a bucket cylinder, respectively, and the bucket 150 may accommodate an object (e.g., soil) on the ground as it rotates, and the control unit 400 may control the entire operation.

Since the boom 130, the arm 140, and the bucket 150 are installed while being supported forward on the upper swing structure 120, when the upper swing structure 120 swings, the boom 130, the arm 140, and the bucket 150 swing together with the upper swing structure 120.

The drive unit 100 may be configured, for example, as an electro-hydraulic system, and the operation thereof may be electronically controlled by the control unit 400.

The reception unit 200 is configured to obtain various information that is needed to perform an automatic loading-position reaching function.

For example, the reception unit 200 may include inertial measurement units (IMUs) 210, a swing angle sensor 220, and environment perception sensors 230, but is not limited thereto.

The inertial measurement units (IMUs) 210 are configured to measure displacements, positions, and/or postures of one or more of the upper swing structure 120, the boom 130, the arm 140 and the bucket 150 constituting the drive unit 100. For example, the inertial measurement units 210, which detect the displacements of the boom 130, the arm 140, and the bucket 150, respectively, to output detection signals to the control unit 400, may be installed in a boom cylinder, an arm cylinder, and a bucket cylinder, respectively, so as to calculate the angles of the boom 130, the arm 140, and the bucket 150 that operate when an automatic loading-position reaching function is performed.

The swing angle sensor 220 is configured to measure a swing angle of the upper swing structure 120. That is, the swing angle sensor 220, which detects the swing angle of the upper swing structure 120 to output a detection signal to the control unit 400, may be installed on the upper swing structure 120.

The environment perception sensors 230 are configured to detect an external environment, and may include one or more terrain sensing sensors such as a camera, a radar, and a LiDAR. Through such environment perception sensors 230, position information of a load receiver (e.g., a dump truck, a hopper, or a crusher) may be identified, or the amount and the like of an excavation object contained in the bucket may be measured.

The reception unit 200 may obtain information that is needed to perform the automatic loading-position reaching function, such as information of terrain including an object, displacement and/or position information of the drive unit, position information of the load receiver, and the like. Here, the object refers to an object to be excavated by the excavator, and may include any type of material that may be loaded or transported by the excavator, such as soil in soil transport work, building debris in building demolition work, and ground debris in ground leveling work.

The reception unit 200 may receive information that is needed to perform the automatic loading-position reaching function from another device (e.g., server) or other components (e.g., memory, sensor, etc.), and may include, for example, a wired or wireless communication device that may be connected to another device via a network to transmit and receive various information described throughout the specification.

The reception unit 200 may generate the information in real time through sensing the information that is needed to perform the automatic loading-position reaching function. For example, the reception unit 200 may sense, in real time, information including the position and size of an object (e.g., soil) within a target area, which changes in real time, as the boom 130, the arm 140, or the bucket 150 of the excavator moves, the type of surrounding terrain, the angle between the object and the surrounding terrain, the position of the load receiver, and the like through one or more terrain sensing sensors such as a camera, a radar, and a LiDAR.

The display controller 300 is an input/output interface for receiving a user input or outputting information. The display controller 300 activates the automatic loading-position reaching function and displays the information obtained by the reception unit 200 (e.g., position of the load receiver, terrain information, etc.) on a display. That is, an operator may activate or deactivate the automatic loading-position reaching function by selecting the automatic loading-position reaching mode through the display controller 300. For example, the operator may activate or deactivate the automatic loading-position reaching function by selecting the automatic loading-position reaching mode on a screen of the display controller 300 that provides a touchscreen function.

The operation unit 500 may be a hydraulic joystick or an electric joystick, preferably an electric joystick that generates an electrical signal proportional to an operator manipulation amount to provide the electrical signal to the control unit 400.

The operation unit 500 may be equipped with an input unit, for example, a button, that receives a user input for starting the automatic loading-position reaching function. Accordingly, the operator may select the automatic loading position reaching mode through the display controller 300 to activate the automatic loading position reaching function, and then press the button of the operation unit 500 to start the automatic reaching function.

The control unit 400 determines position coordinates (Xr, Yr, Zr) of a destination point as the loading position to be reached by the bucket 150, on the basis of the information obtained by the reception unit 200, and controls the drive unit 100 to perform the automatic loading-position reaching function such that the bucket reaches the destination point on the basis of the determined position coordinates (Xr, Yr, Zr) of the destination point.

The control unit 400 calculates a target swing angle of the upper swing structure and target rotational angles of one or more of the boom, the arm, and the bucket that allow the bucket to reach the position coordinates (Xr, Yr, Zr) of the destination point, on the basis of the determined position coordinates (Xr, Yr, Zr) of the destination point, moves the boom until the bucket reaches the Z-coordinate (Zr), swings the upper swing structure on the basis of the target swing angle, and moves one or more of the boom, the arm, and the bucket until the bucket reaches the X-coordinate (Xr), the Y-coordinate (Yr), and the Z-coordinate (Zr) while maintaining a bucket angle during or after the swing operation of the upper swing structure.

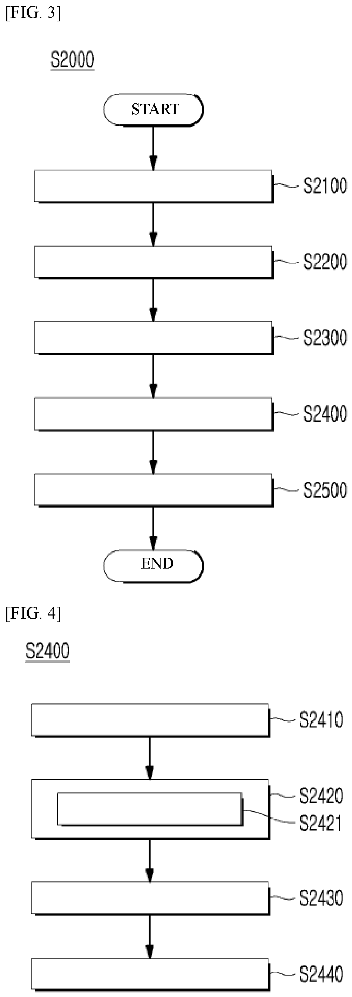

The above-described series of operations will be described in detail below with reference to FIGS. 3 to 10.

Throughout the specification, it will be understood by those skilled in the art that, in addition to the components illustrated in FIGS. 1 and 2, other general-purpose components may be further included in the excavator. For example, the excavator may further include various types of actuators for moving each of the boom 130, the arm 140, and the bucket 150, a drive control module for detailed control thereof, pipes, and a memory for storing data used throughout the operation.

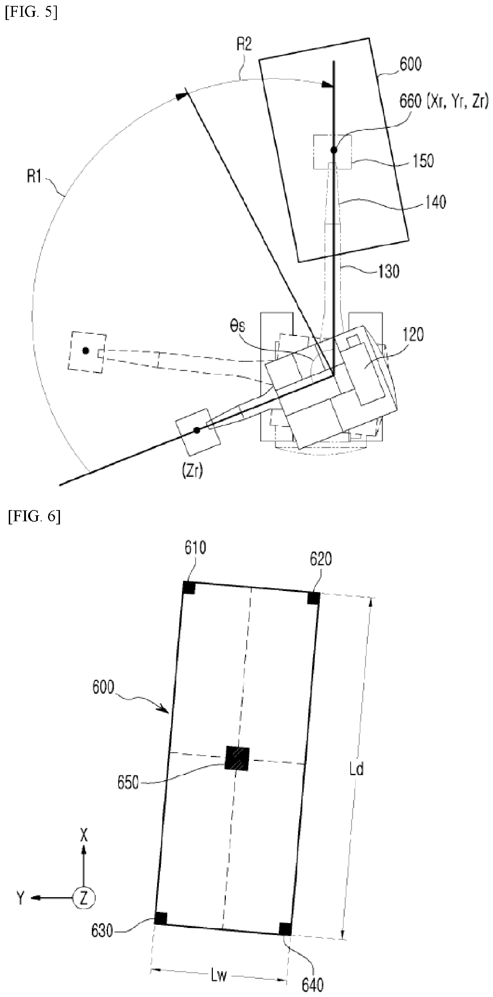

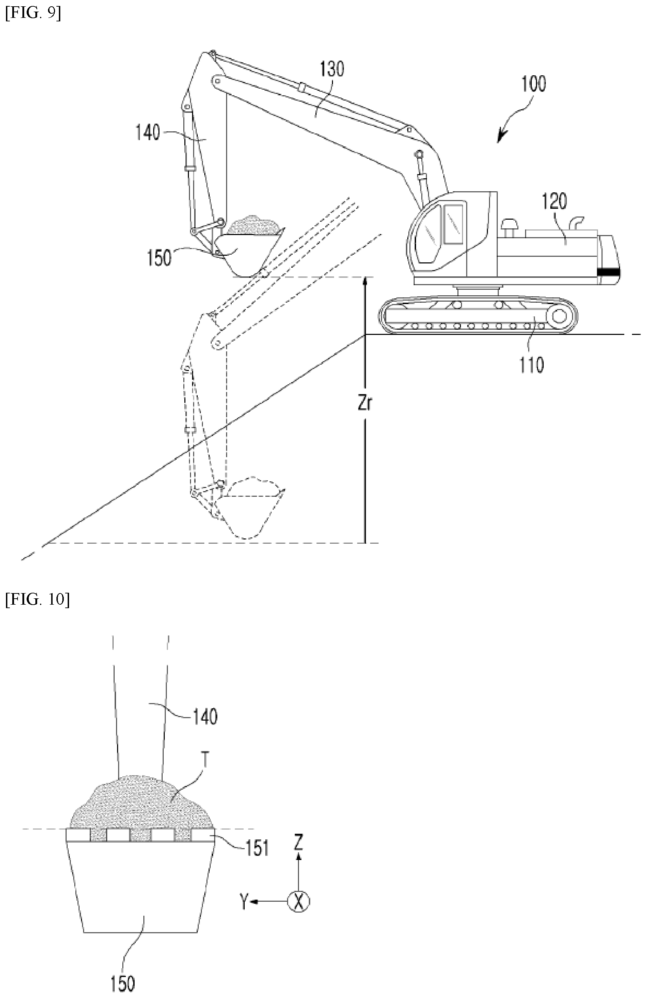

FIGS. 3 and 4 are flowcharts illustrating a method for controlling an excavator according to one embodiment, FIG. 5 is a conceptual diagram illustrating a movement trajectory of an excavator performing an automatic loading-position reaching function according to one embodiment, FIGS. 6 to 8 are diagrams illustrating a step of determining position coordinates of a destination point according to one embodiment, and FIGS. 9 and 10 are diagrams illustrating a step of moving a boom according to one embodiment.

Referring to FIG. 3, a method S2000 for controlling the excavator in order to cause the bucket 150 containing an object to automatically reach the loading position from the digging position includes: a step S2100 of activating the automatic loading position reaching function as the automatic loading position reaching mode is selected through the display controller 300; a step S2200 of obtaining, by the reception unit 200, information that is needed to perform the automatic loading position reaching function; a step S2300 of determining, by the control unit 400, position coordinates (Xr, Yr, Zr) of the destination point as the loading position to be reached by the bucket 150, on the basis of the obtained information; a step S2400 of performing, by the control unit 400, the automatic loading position reaching function such that the bucket 150 reaches the destination point on the basis of the determined position coordinates (Xr, Yr, Zr) of the destination point; and a step S2500 of determining, by the control unit 400, whether the bucket 150 has reached the destination point.

In the step S2100, the automatic loading-position reaching function is activated as the automatic loading-position reaching mode is selected through the display controller 300.

In the step S2200, the reception unit 200 obtains information regarding the terrain including the excavation object, displacement and/or position information of each component of the drive unit 100, information regarding the load receiver, and the like.

The information regarding the terrain including the excavation object may include information regarding whether the excavation object is a light material or a heavy material. The information regarding the excavation object may be obtained by the reception unit 200, more specifically, by the environment perception sensors 230.

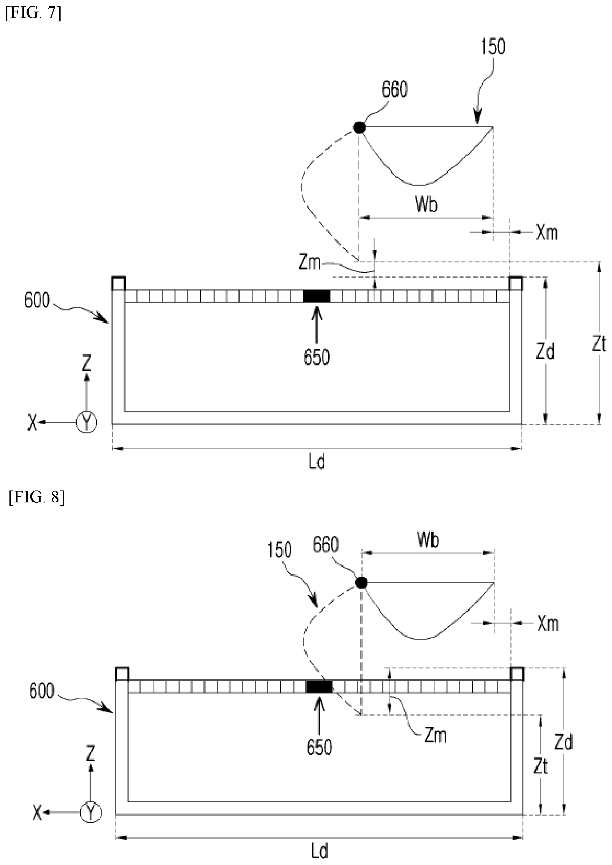

Referring to FIGS. 6 and 7, information regarding the load receiver 600 may include, for example, the shape of the load receiver 600, position coordinates (X1, Y1, Zd1) to (X4, Y4, Zd4) of a first corner 610 to a fourth corner 640 of the load receiver 600, position coordinates (Xd, Yd) of a center 650 of the load receiver 600, a length Ld and a width Lw of the load receiver 600, a height Zd of the uppermost portion of the load receiver 600, an amount of the object loaded within the load receiver 600, and the like. The information regarding the load receiver 600 may be obtained by the reception unit 200, more specifically, by the environment perception sensors 230. The environment perception sensors 230 continuously detect the information until the automatic loading-position reaching function is deactivated.

In the step S2300, the control unit 400 determines the position coordinates (Xr, Yr, Zr) of the destination point as the loading position to be reached by the bucket 150, on the basis of the information obtained from the reception unit 200.

FIG. 7 illustrates the bucket 150 placed above the load receiver 600, and the load receiver 600 on which the object contained in the bucket 150 can be loaded. The reception unit 200 senses a first height Zd which is a distance between the ground and the uppermost position of the load receiver 600, and the control unit 400 sets a target value of a second height Zt which is a lowermost height that can be reached by the bucket 150, so as to have a margin of a preset value (e.g., 50 cm) or more from the first height Zd. Accordingly, by sensing the second height Zt in real time while rotating the boom 130, the boom-up operation can be performed until a difference Zm between the first height Zd and the second height Zt reaches the preset value (e.g., 50 cm).

In one embodiment, the control unit 400 determines the destination point 660 of the bucket 150 on the basis of at least one of the difference Zm between the first height Zd and the second height Zt, a width Wb of the bucket 150, and a center position of the load receiver 600. For example, as illustrated in FIG. 7, the lowermost height to be reached by the bucket 150 is determined such that the difference Zm between the second height Zt and the first height Zd reaches the preset value (e.g., 50 cm), and a height Zr of the destination point 660 can be determined by adding the width Wb of the bucket 150 to the determined lowermost height such that the bucket 150 can sufficiently rotate by a preset angle (e.g., 90 degrees) or more while loading the object within the load receiver. In addition, by detecting a center position (Xd, Yd) of the load receiver 600 in the X-axis direction and the Y-axis direction and determining the X-coordinate (Xr) and the Y-coordinate (Yr) of the destination point 660 so as to be positioned at the center position (Xd, Yd) of the load receiver 600 or within a preset distance margin therefrom, the position coordinates (Xr, Yr, Zr) of the destination point 660, which is a target position to be finally reached by a rotational axis of the bucket 150, can be determined.

In one embodiment, referring to FIG. 7, when a light material such as gravel is dumped, the position coordinates (Xr, Yr, Zr) of the destination point 660 may be determined on the basis of at least one of Equation 1 and Equation 2 below, but are not limited thereto. [Equation 1] $\begin{matrix}X 1 = Wb + Xm \\ Xr = Xd - \left[\left(Ld/2\right)-X1\right] \\ Z 1 = Wb + Zm \\ Zr = Zd + Z 1\end{matrix}$ [Equation 2] $Yr = Yd + Ym$

Here, Xm, Ym, and Zm may respectively represent a preset first margin, second margin, and third margin in the X-axis direction, the Y-axis direction, and the Z-axis direction; Wb may represent the width of the bucket 150; and Xd and Yd may respectively represent an X-coordinate and a Y-coordinate of a center position of the load receiver 600 in the X-axis direction and the Y-axis direction. In general, Ym may be 0.

In another embodiment, referring to FIG. 8, when a heavy material such as rock is dumped, the Z-coordinate (Zr) among the position coordinates (Xr, Yr, Zr) of the destination point 660 may be determined on the basis of Equation 3 below, but is not limited thereto. [Equation 3] $\begin{matrix}Z 1 = Wb - Zm \\ Zr 1 = Zd + Z 1\end{matrix}$

According to one embodiment, whether the excavation object is classified as a light material or a heavy material may be detected by the environment perception sensors 230. In this case, when the excavation object is a light material, the Z-coordinate of the destination point may be set to be relatively high as illustrated in FIG. 7, and when the excavation object is a heavy material, the Z-coordinate of the destination point may be set to be relatively low as illustrated in FIG. 8 in order to reduce a dumping impact of the heavy material.

As such, the control unit 400 may set, as a target angle, an angle of the boom 130 at which a difference between the lowermost portion of the bucket 150 and the uppermost portion of the load receiver 600 is equal to or greater than a certain margin, perform a boom-up operation only up to the target angle, and control the boom 130 such that the boom-up operation is not performed beyond the target angle, thereby enabling efficient movement corresponding to a required amount of movement.

In another embodiment, the position coordinates (Xr, Yr) of the destination point 660 may be the center position (Xd, Yd) of the load receiver 600.

In the step S2400, the control unit 400 performs the automatic loading-position reaching function such that the bucket 150 reaches the destination point 660 on the basis of the determined position coordinates (Xr, Yr, Zr) of the destination point 660. In this case, the automatic loading-position reaching function may be initiated when the start button of the operation unit 500 is pressed by the operator.

Referring to FIG. 4, the step S2400 includes sub-steps S2410, S2420, S2430, and S2440.

In the step S2410, the control unit 400 calculates a target swing angle of the upper swing structure 120 and target rotational angles of one or more of the boom 130, the arm 140, and the bucket 150 that allow the bucket 150 to reach the position coordinates (Xr, Yr, Zr) of the destination point 660, on the basis of the determined position coordinates (Xr, Yr, Zr) of the destination point 660.

The target rotational angles of one or more of the boom 130, the arm 140, and the bucket 150 and the target swing angle of the upper swing structure 120 may be calculated using an inverse kinematics model. The inverse kinematics model refers to a model that calculates corresponding joint angles when a position and a posture of an end thereof are given.

In the step S2420, as illustrated in FIGS. 5 and 9, the control unit 400 moves the boom 130 until the bucket 150 reaches the Z-coordinate (Zr) from a digging completion position.

The control unit 400 may move the boom 130 until the difference between the lowermost height that can be reached by the bucket 150 and the uppermost height of the load receiver 600 corresponds to the preset value. Here, the lowermost portion of the bucket 150 refers to the lowermost height that can be reached by the end point of the bucket 150, in consideration of the rotation of the bucket 150.

That is, the Z-coordinate (Zr) is determined by summing the width Wb of the bucket 150, the first height Zd, which is the distance between the ground and the uppermost position of the load receiver 600, and the preset margin. Therefore, a collision between the bucket 150 and the load receiver 600 may be prevented even when the swing operation of the upper swing structure 120 is performed in a state where the boom 130 is moved until the bucket 150 reaches the Z-coordinate (Zr).

The control unit 400 may control the swing operation of the upper swing structure 120 to be prohibited while the movement of the boom 150 is not completed.

According to one embodiment, the step S2420 may include the sub-step S2421.

In the step S2421, while the movement of the boom 150 is completed, the control unit 400 determines whether the bucket 150 is in an overload state based on whether an amount of the object T contained in the bucket 150 exceeds a preset criterion. For example, as illustrated in FIG. 10, the control unit 400 may set, as a reference line, a line obtained by connecting tips of bucket teeth 151, and may determine that the bucket 150 is in the overload state when the object T exceeds the reference line.

The overload state of the bucket 150 may be detected based on LiDAR-based point cloud data. Alternatively, the overload state of the bucket 150 may be detected by a trained AI model, such as a convolutional neural network (CNN). Such an AI model may be configured in the excavator together with a camera sensor installed in the forehead of the excavator.

In the step S2430, as illustrated in FIG. 5, the control unit 400 swings the upper swing structure 120 such that the bucket 150 reaches the destination point 660, on the basis of the calculated target swing angle θs.

The swing section according to the target swing angle θs may be divided into a first section R1 in which the upper swing structure 120 is accelerated (swing-accelerated) to a preset swing speed and performs uniform circular motion when reaching the preset swing speed and a second section R2 which is a braking section where swing braking of the upper swing structure 120 is performed.

When the bucket 150 is determined to be in the overload state (in the step S2421), the control unit 400 may limit the swing acceleration and/or the swing speed of the upper swing structure 120 in the first section R1 to a certain ratio of a preset swing acceleration and/or a preset swing speed, in order to prevent the object contained in the bucket 150 from spilling out of the bucket during the swing operation.

When the bucket 150 is determined not to be in the overload state (in the step S2421), the control unit 400 may swing the upper swing structure 120 at the preset swing acceleration and the preset swing speed.

The control unit 400 reduces the swing speed of the upper swing structure 120 when the bucket 150 enters the second section R2, which is the swing braking section, during the swing operation of the upper swing structure 120. The swing braking section may be calculated based on the moment of inertia of the upper swing structure 120, the swing braking torque, and the current swing speed.

In the step S2440, the control unit 400 moves one or more of the boom 130, the arm 140, and the bucket 150 until the bucket 150 reaches the X-coordinate (Xr), the Y-coordinate (Yr), and the Z-coordinate (Zr) while maintaining the bucket angle during or after the swing operation of the upper swing structure 120.

Meanwhile, the method S2000 for controlling an excavator in order to cause the bucket 150 containing an object to automatically reach a loading position from a digging position may further include the step S2500 of determining, by the control unit 400, whether the bucket 150 has reached the destination point 660.

In the step S2500, when the bucket 150 is determined to have reached the destination point 660 within a preset time (e.g., 30 seconds), the control unit 400 displays completion of the automatic loading-position reaching function on the display controller 300. In addition, when the bucket 150 is determined not to have reached the destination point 660 within the preset time, the control unit 400 regards the determination as an error, displays the error on the display controller 300, and continues to perform the automatic loading-position reaching function until the bucket 150 reaches the destination point 660.

Meanwhile, after the automatic loading-position reaching function has been performed once, when the operator presses the start button of the operation unit 500 again to cause the bucket 150 to reach the loading position from the digging position, the automatic loading-position reaching function starts from the step S2400 (the automatic loading-position reaching mode remains active).

Meanwhile, when the operator no longer needs to use the automatic loading-position reaching function, the operator deactivates the automatic loading-position reaching mode through the display controller 300, thereby terminating the automatic loading-position reaching function.

As described above, the method and the system for controlling an excavator according to the present disclosure may improve work efficiency and operator convenience by performing the automatic loading-position reaching function to cause the bucket containing the excavation object to automatically reach the loading position.

It should be understood that the present disclosure is not limited to the aspects described above and illustrated in the drawings. Rather, those skilled in the art will recognize that many changes and modifications can be made within the scope of the present disclosure and the appended claims. In the drawings and the specification, aspects have been disclosed for purposes of illustration only, not for purposes of limitation, and the scope of the concept of the disclosure is set forth in the following claims.

### Description of Reference Numerals

1000 system for controlling excavator
100 drive unit
110 lower traveling structure
120 upper swing structure
130 boom
140 arm
150 bucket
200 reception unit
210 inertial measurement unit
220 swing angle sensor
230 environment perception sensor
400 control unit
500 operation unit
600 load receiver
610 first corner
620 second corner
630 third corner
640 fourth corner
650 center of load receiver
660 destination point

## Claims

1. A method for controlling an excavator in order to cause a bucket containing an object to automatically reach a loading position from a digging position, the method comprising the steps of:
activating an automatic loading-position reaching function as an automatic loading-position reaching mode is selected through a display controller;
obtaining, by a reception unit, information that is needed to perform the automatic loading-position reaching function;
determining, by a control unit, position coordinates (Xr, Yr, Zr) of a destination point as the loading position to be reached by the bucket, on the basis of the obtained information; and
performing, by the control unit, the automatic loading-position reaching function such that the bucket reaches the destination point on the basis of the determined position coordinates (Xr, Yr, Zr) of the destination point.

2. The method of claim 1,
wherein the step of performing the automatic loading-position reaching function includes the steps of:
calculating a target swing angle of an upper swing structure and target rotational angles of one or more of a boom, an arm, and the bucket that allow the bucket to reach the position coordinates (Xr, Yr, Zr) of the destination point, on the basis of the determined position coordinates (Xr, Yr, Zr) of the destination point;
moving the boom until the bucket reaches the Z-coordinate (Zr);
swinging the upper swing structure on the basis of the target swing angle; and
moving one or more of the boom, the arm, and the bucket until the bucket reaches the X-coordinate (Xr), the Y-coordinate (Yr), and the Z-coordinate (Zr) while maintaining a bucket angle during or after the swing operation of the upper swing structure.

3. The method of claim 1,
wherein the position of the bucket is based on a position of the center of a rotational axis of the bucket.

4. The method of claim 1,
wherein in the step of determining the position coordinates (Xr, Yr, Zr) of the destination point,
the Z-coordinate (Zr) of the destination point is determined by summing the width of the bucket, a first height which is a distance between the ground and an uppermost position of the load receiver, and a preset margin.

5. The method of claim 2,
wherein in the step of moving the boom,
the swing operation of the upper swing structure is prohibited while the movement of the boom is not completed.

6. The method of claim 2,
wherein the step of moving the boom further includes the step of:
determining, while the movement of the boom is completed, whether the bucket is in an overload state based on whether an amount of the object contained in the bucket exceeds a preset criterion.

7. The method of claim 6,
wherein in the step of swinging the upper swing structure,
when the bucket is determined to be in the overload state, a swing speed of the upper swing structure is limited to a certain ratio of a preset swing speed in order to prevent the object contained in the bucket from spilling out of the bucket during the swing.

8. The method of claim 6,
wherein in the step of swinging the upper swing structure,
when the bucket is determined not to be in the overload state, the upper swing structure is swung at a preset swing speed.

9. The method of claim 2,
wherein in the step of swinging the upper swing structure,
a swing speed of the upper swing structure is reduced when the bucket enters a swing braking section during the swing operation of the upper swing structure.

10. The method of claim 1, further comprising the step of
determining, by the control unit, whether the bucket has reached the destination point.

11. The method of claim 10,
wherein in the step of determining whether the bucket has reached the destination point,
when the bucket is determined to have reached the destination point within a preset time, completion of the automatic loading-position reaching function is displayed on the display controller, and
when the bucket is determined not to have reached the destination point within the preset time, the determination is regarded as an error, the error is displayed on the display controller, and the automatic loading-position reaching function continues to be performed until the bucket reaches the destination point.

12. A system for controlling an excavator in order to cause a bucket containing an object to automatically reach a loading position from a digging position, the system comprising:
a drive unit including a boom, an arm, the bucket, and an upper swing structure;
a reception unit that obtains information that is needed to perform an automatic loading-position reaching function;
a display controller serving as an input/output interface for receiving a user input or outputting information, wherein the display controller activates the automatic loading-position reaching function and displays the information obtained by the reception unit; and
a control unit that determines position coordinates (Xr, Yr, Zr) of a destination point as the loading position to be reached by the bucket, on the basis of the information obtained by the reception unit, and controls the drive unit to perform the automatic loading-position reaching function such that the bucket reaches the destination point on the basis of the determined position coordinates (Xr, Yr, Zr) of the destination point.

13. The system of claim 12,
wherein the control unit
calculates a target swing angle of the upper swing structure and target rotational angles of one or more of the boom, the arm, and the bucket that allow the bucket to reach the position coordinates (Xr, Yr, Zr) of the destination point, on the basis of the determined position coordinates (Xr, Yr, Zr) of the destination point,
moves the boom until the bucket reaches the Z-coordinate (Zr),
swings the upper swing structure on the basis of the target swing angle, and
moves one or more of the boom, the arm, and the bucket until the bucket reaches the X-coordinate (Xr), the Y-coordinate (Yr), and the Z-coordinate (Zr) while maintaining a bucket angle during or after the swing operation of the upper swing structure.

14. The system of claim 12,
wherein the position of the bucket is based on a position of the center of a rotational axis of the bucket.

15. The system of claim 12,
wherein the control unit
determines the Z-coordinate (Zr) of the destination point by summing the width of the bucket, a first height which is a distance between the ground and an uppermost position of the load receiver, and a preset margin.

16. The system of claim 13,
wherein the control unit
prohibits the swing operation of the upper swing structure while the movement of the boom is not completed.

17. The system of claim 13,
wherein the control unit
determines, while the movement of the boom is completed, whether the bucket is in an overload state based on whether an amount of the object contained in the bucket exceeds a preset criterion.

18. The system of claim 17,
wherein the control unit,
when the bucket is determined to be in the overload state, limits a swing speed of the upper swing structure to a certain ratio of a preset swing speed in order to prevent the object contained in the bucket from spilling out of the bucket during the swing.

19. The system of claim 17,
wherein the control unit,
when the bucket is determined not to be in the overload state, swings the upper swing structure at a preset swing speed.

20. The system of claim 13,
wherein the control unit
reduces the swing speed when the bucket enters a swing braking section during the swing operation of the upper swing structure.

21. The system of claim 12,
wherein the control unit
determines whether the bucket has reached the destination point,
when the bucket is determined to have reached the destination point within a preset time, displays completion of the automatic loading-position reaching function on the display controller, and
when the bucket is determined not to have reached the destination point within the preset time, regards the determination as an error, displays the error on the display controller, and performs the automatic loading-position reaching function until the bucket reaches the destination point.
